# EUROPEAN PATENT SPECIFICATION

(11) **EP 2 380 943 B1**
(45) Date of publication and mention of the grant of the patent: **24.05.2017**
(21) Application number: 10425131.9
(22) Date of filing: 22.04.2010
(51) Int. Cl.: C09K 5/04, G01F 1/00, C09K 5/10, G01M 3/22

(54) **FLUORESCENT DETECTOR**
FLUORESZENZDETEKTOR
DÉTECTEUR DE FLUORESCENCE

(43) Date of publication of application: 26.10.2011
(73) Proprietor: Berton, Gabriele, 24035 Curno (BG) (IT)
(72) Inventor: Berton, Gabriele, 24035 Curno (BG) (IT)
(74) Representative: Trupiano, Federica

(56) References cited:
- WO-A1-2005/049761
- US-A- 4 249 412
- US-A1- 2005 019 934
- US-A1- 2005 023 503
- US-A1- 2006 051 639
- US-A1- 2006 163 528
- US-A1- 2006 186 371

## Description

As it is known, cooling circuits, both of industrial and other type, are suitable for the circulation of a fluid, which can be a gas or a liquid, according to the type of cooling to be performed and according to the products and/or spaces to be cooled.

Refrigeration is a process aimed at lowering the temperature of an environment (a room, a compartment, the inside of a container) or an object to below the ambient temperature.

The production of cold is extremely important in modem industry and is used in many sectors, such as the food industry for food preservation, in medicine and biology to store samples and for some therapies, in astronomy to cool the CCD sensors of telescopes, in the air conditioning of environments such as motor cars and/or dwellings, offices or the like.

Among the technologies available for the production of cold, the most important and most widely used is the technology based on the compression/expansion cycle. In this case, a compressor compresses a gas, the temperature of which increases due to friction caused by passage of the piston inside the head of the compressor; the compressed gas is pushed into a condensation chamber where the latent heat (excess heat) is removed. Once condensed, the fluid is conveyed to the evaporation chamber in the place in which the heat is not required, entering the chamber it encounters a valve called thermostatic valve; inside this valve is a nozzle called orifice that nebulizes the liquid to make it subsequently expand. The liquid is transformed into gas to then return to the motor and complete/start a new cycle. This principal is widely used in domestic refrigerators and air conditioners, due to its simple construction and use (lack of maintenance). However, it is necessary to prevent all possible gas leaks, which would make it impossible to use the system; for this reason a hermetically sealed electric compressor is used in common refrigerators. This type of technology is limited to a minimum temperature of -109 °C: to obtain lower temperatures other systems must be used.

Therefore, the refrigerants most commonly used are based on hydrofluorocarbons (HFC), which have been adopted to replace the analogous chlorinated compounds (CFC, HCFC) responsible for destroying the ozone layer of the atmosphere.

As the majority of refrigeration systems are closed circuit, it is very important for the refrigerant level to remain constant.

One of the main problems encountered in closed circuit refrigeration/air conditioning systems like those indicated above, is that of rapid and accurate detection of any leaks, to allow immediate and effective action to be take, thereby avoiding costly recharging and harmful dispersion of refrigerant fluids into the environment. In fact, along each refrigeration/air conditioning circuit there are numerous points in which leakage is possible, and it is therefore necessary to provide a system capable of detecting these leaks with accuracy and precision.

According to prior art, any leaks in a system like those described above, are detected by adding a suitable additive to the circuit to be analysed during the operation to locate the leak and, if necessary, pressurizing the circuit to detect any leaks with the naked eye and thereby identify any points of breakage.

It is evident that this system, which is based on visual examination of the circuit, is not very sensitive and is unsuitable to detect small cracks and consequent small leaks, besides being somewhat impractical.

To overcome the drawbacks mentioned above, refrigerant compositions containing fluorescent dyes have been studied and are therefore known. These compositions can be used in sealed/closed circuit refrigeration systems so as to make the leak, and therefore the escape point, immediately evident, by directly inspecting the circuit simply by means of illumination with a UV lamp.

For example, WO 2005/049761 describes a refrigerant composition comprising a fluorescent dye and a solubilizing agent, which allows the detectable UV dye to be introduced in soluble form into the refrigerant fluid. Optionally, the same composition can contain a lubricant agent.

According to the description of WO 2005/049761, particularly preferred refrigerant compositions are those based on hydrofluorocarbons, fluoroethers, hydrocarbons, DME (dimethyl ethers), carbon dioxide, ammonia and mixtures thereof, while some of the mentioned solubilizing agents are, for example, hydrocarbons, amides, ketones, nitriles, esters, lactones, fluoroethers and the like. The refrigerant compositions described are suitable to be used, for example, in air conditioning systems, in domestic cooling/refrigeration systems, in residential air conditioners, in motor car air conditioning systems, in refrigeration systems for vehicles, industrial refrigerators and the like.

The refrigerant composition according to WO 2005/049761 is suitable for gaseous systems, such as typically hydrofluorocarbons, fluoroethers, volatile hydrocarbons, DME, carbon dioxide, ammonia and mixtures thereof, and so, in order to disperse the fluorescent dye in the gas it must necessarily also comprise at least one solubilizing agent, adapted to solubilize/disperse the dye in the gas.

US 2005/0019934 discloses a blended dye for coolant including a first water miscible dye adapted to fluoresce when illuminated with a light, having a wavelength of about 340 nm to about 420 nm and a second water miscible dye adapted to fluoresce when illuminated with a light having a wavelength of about 400 nm to about 460 nm. The second dye has a different composition from the first dye.

US 2006/0186371 discloses a heat transfer fluid, such as an antifreeze composition, coloured with a dye selected between Acid Yellow 5 and Acid Yellow 3. The composition may further include other dyes. It is described that the above indicated dyes are particularly advantageous as colouring agents for glycol-based antifreeze compositions. The composition described in D5 is used to formulate a dye concentrate for use in preparation of heat transfer fluid.

US 4 249 412 discloses a fluorescent leak detection composition comprising sodium fluorescein in addition to many other components. The characteristics of this composition is that may be effectively coated on and will cling to any surface, including vertical surfaces and rounded surfaces, without running off.

Moreover, known systems for the detection of leaks in refrigeration systems that use gas as cooling mixture cannot be applied to circuits in which a liquid refrigerant circulates, as substances soluble in a gaseous mixture are not soluble in a liquid mixture, and vice versa.

Consequently, the technology known for the detection of leaks in gas cooling systems cannot be used in analogous system cooled by circulation of liquids. Therefore, the object of the present invention is to provide a refrigerant liquid that allows detection of possible leaks, even microleaks, at any time, without the need to add any additives to the circuit.

Another object of the present invention is to provide a refrigerant liquid that can be added to refrigerant liquids already in use in closed circuit systems without the need for additives, solubilizing agents or the like and without the formation in the mixture thus obtained of precipitates, suspensions or other insoluble impurities that could damage the system.

A further object of the invention is to provide a process for the detection of leaks in closed cooling circuits in which the refrigerant element is represented by a mixture in liquid state.

These and other objects and relative advantages which will be more apparent from the description below are achieved by the use of a water-based refrigerant liquid mixture for closed cooling circuits comprising at least one UV fluorescent dye and at least one liquid selected from water, ethylene glycol, propylene glycol, hexylene glycol, glycerin or mixtures thereof, characterized by the fact that said UV fluorescent dye is fluorescein at a concentration of 1.2% of fluorescein per litre of refrigerant liquid, as additive in closed circuit liquid cooling systems, for the detection of possible leaks.

In particular, said UV fluorescent dye is fluorescein.

The composition is advantageously used, for example, as refrigerant liquid for sealed circuits of motor cars or for industrial plants, for example floor heating/cooling systems, which are characterized in that they are water-based systems or systems containing glycol and/or glycerin.

The composition is suitable to be used as is, as refrigerant liquid of the cooling circuit, or as additive for all water-based solutions already existing and circulating, for the detection of one or more microleaks of the circuit.

In practice, the composition can have a dual use: it can be used as is as refrigerant liquid in the closed circuits of cooling systems, for example, of motor cars, industrial plants or dwellings, or it can be used as additive, always in closed circuit liquid cooling systems, to detect possible leaks. In the first case, the composition will act as refrigerant liquid and, simultaneously, as leak detector for the system in which it is operating, while in the second case it can be added directly to the refrigerant liquid present in the system without the need to add other products, such as solubilizing agents.

In both cases, as the refrigerant mixture is a water-based liquid, or a liquid completely miscible with water, its addition to the cooling circuit will not cause the risk of formation of insoluble substances, precipitates or suspensions harmful to the operation of this system.

Again according to the present invention, fluorescein is preferred as UV fluorescent dye, for example of the type currently marketed with the trade name Fluoresceina 310 by C.E.S.A Fragrances (Milan).

In general, to produce the refrigerant mixture, said detectable UV dye is present in the refrigerant mixture in a quantity between 1% and 5% per litre of refrigerant liquid.

The concentration of 1.2% of fluorescein per litre of refrigerant liquid has proved to be particularly effective.

Detection of any leaks or microcracks of the product is performed using common known UV detectors (lamps).

In the case in which the mixture is glycol-based, it will automatically act as antifreeze liquid in the cooling system in which it is used, for example in the case of sealed circuits of civil and industrial motor vehicles, and simultaneously perform the function of leak detector due to microcracks in the system, which are difficult to detect according to prior art methods.

The advantages of the present invention, with reference to some prior art, for example consist in the fact that the refrigerant mixture according to the invention can be used in water or water-based systems, while products according to prior art can only be used in gaseous systems as they are incompatible with water systems. In fact, as products according to some prior art are not soluble in water systems, if they are introduced into these, even only as additives, they could not disperse and solubilize in the water solution and therefore could not be used as leak detector. Moreover, as they are only suitable for gaseous systems, they could not have the multiple function of antifreeze/refrigerant/leak detecting liquids that those forming the subject matter of the present invention instead have.

With reference to the description above, an example of refrigerant/antifreeze mixture according to the invention and its use in a sealed circuit of a motor car are provided by way of non-limiting example.

The term "inhibition package" as used in the following example, is intended to indicate a mixture of compounds/substances that have a corrosion-prevention action and can simultaneously perform an alkali reserve action, a detergent action and an antifoaming action.

### EXAMPLE 1

### Antifreeze mixture

| | |
|---|---|
| Ethylene glycol | 95% |
| Inhibition package | 5% |
| Fluorescein | 1.2 g/l |

In this case, the inhibition package comprises a corrosion inhibitor currently marketed by Bayer with the trade name "Preventol" and sodium hydroxide as alkali reserve agent.

Other alkali reserve agents can be selected from silicates, borax and the like.

In addition, the inhibition package pursuant to example 1 comprises commonly known detergent and antifoaming agents.

### EXAMPLE 2

Use of the mixture of example 1 as antifreeze/leak detecting liquid for motor cars

The mixture pursuant to example 1 was used to completely replace the antifreeze liquid provided standard in a PORSCHE CAYENNE TURBO S motor car. The car has a horsepower of 521 with temperature in the region of 106°, and therefore the mixture according to the invention was tested in serious test conditions. More than 60,000 km in two years were covered and the efficiency of the product was evaluated in different operating stages. No microcracks or microleaks from the circuit were observed (using UV detector/lamp), and the initial properties of the liquid remained unchanged.

## Claims

1. Use of a water-based refrigerant liquid mixture for closed cooling circuits, comprising at least one UV fluorescent dye and at least one liquid selected from water, ethylene glycol, propylene glycol, hexylene glycol, glycerin or mixtures thereof, **characterized by** the fact that said UV fluorescent dye is fluorescein at a concentration of 1.2% of fluorescein per litre of refrigerant liquid, as additive in closed circuit liquid cooling systems, for the detection of possible leaks.

2. Use of the mixture according to claim 1 as antifreeze liquid in the closed circuits of cooling systems.

3. Use according to claim 1, **characterized in that** said cooling systems are cooling systems for motor cars, industrial plants, dwellings.

4. A process for the detection of possible leaks in closed circuit cooling systems comprising a UV detection step of the previously filled circuit using the mixture according to claim 1.

## Patentansprüche

1. Verwendung einer auf Wasser basierenden Kühlmittelflüssigkeitsmischung für geschlossene Kühlkreisläufe, enthaltend mindestens einen UV-Fluoreszenzfarbstoff und mindestens eine Flüssigkeit ausgewählt aus Wasser, Ethylenglykol, Propylenglykol, Hexylenglykol, Glycerin oder Mischungen davon, **gekennzeichnet durch** die Tatsache, dass der UV-Fluoreszenzfarbstoff Fluorescein ist mit einer Konzentration von 1,2% Fluorescein pro Liter Kühlmittelflüssigkeit als Additiv in geschlossenen Kühlkreisläufen, zur Entdeckung von möglichen Leckagen.

2. Verwendung der Mischung gemäß Anspruch 1, als Frostschutzmittel in den geschlossenen Kreisläufen von Kühlanlagen.

3. Verwendung gemäß Anspruch 1, **dadurch gekennzeichnet, dass** die Kühlanlagen Kühlanlagen für Kraftfahrzeuge, Industrieanlagen, Wohnungen sind.

4. Ein Verfahren zur Entdeckung von möglichen Leckagen in geschlossenen Kühlkreisläufen enthaltend einen Nachweisschritt mit Hilfe von UV-Licht hinsichtlich des zuvor gefüllten Kreislaufs unter Verwendung der Mischung gemäß Anspruch 1.

## Revendications

1. Utilisation d'un mélange de liquide réfrigérant à base d'eau pour des circuits de refroidissement fermés, comprenant au moins un colorant fluorescent sous UV et au moins un liquide sélectionné parmi l'eau, l'éthylène glycol, le propylène glycol, l'hexylène glycol, la glycérine et leurs mélanges, **caractérisé en ce que** ledit colorant fluorescent sous UV est de la fluorescéine à une concentration de 1,2 % de fluorescéine par litre de liquide réfrigérant, comme additif dans des systèmes de refroidissement par liquide en circuit fermé, pour la détection d'éventuelles fuites.

2. Utilisation du mélange selon la revendication 1 comme liquide antigel dans les circuits fermés de systèmes de refroidissement.

3. Utilisation selon la revendication 1, **caractérisée en ce que** lesdits systèmes de refroidissement sont des systèmes de refroidissement pour des véhicules automobiles, des installations industrielles, des habitations.

4. Procédé pour la détection d'éventuelles fuites dans des systèmes de refroidissement en circuit fermé comprenant une étape de détection UV du circuit préalablement rempli en utilisant le mélange selon la revendication 1.
